# EUROPEAN PATENT APPLICATION

(11) **EP 4 276 729 A1**
(43) Date of publication of application: **15.11.2023**
(21) Application number: 23171807.3
(22) Date of filing: 05.05.2023
(51) Int. Cl.: G06Q 30/08

(54) **AUCTIONS IN EXTENDED REALITY ENVIRONMENTS**

(30) Priority: 13.05.2022 US 202217743692
(71) Applicant: eBay, Inc., San Jose, CA 95125 (US)
(72) Inventor: BELAVY, Stefan, San Jose 95125 (US); HARO, Antonio, San Jose 95125 (US); CHALKLEY, Andrew, San Jose 95125 (US); RANGASWAMI, Deepak, San Jose 95125 (US)
(74) Representative: Müller-Boré & Partner Patentanwälte PartG mbB

(57) **Abstract**

Extended reality auction techniques are described that support conducting live auctions in an extended reality environment, such as augmented or virtual reality environments. Image data, for instance, is received by a computing device from a first computing device depicting an item for auction. An extended reality auction system initiates an auction for the item based on identifying that at least part of the item is in the image data. The image data is provided to a second computing device for display in the extended reality environment during the auction. Responsive to determining that a criterion of the auction is not satisfied by the image data, remedial action is initiated by the extended reality auction system.

## Description

### BACKGROUND

Service provider systems provide users with access to millions of different items. Some of these items, such as purses, cars, or trading cards, are available for purchase via an auction, where users can bid on an item without having to attend an in-person auction through interaction with an online auction system. However, some users still prefer in-person auctions due to various challenges of online auctions, including a lack of trust in the authenticity of the item and an inability to inspect aspects of item in conventional online auction systems. This often results in undesired consequences to conventional online auction systems, such as a decrease in user satisfaction, a decrease in user interaction with subsequent auctions, and/or a cost of returning the object when a user receives an inauthentic item.

### SUMMARY

Techniques and systems are described for conducting live auctions in an extended reality environment. In one example, a computing device implements an extended reality auction system to receive a request to initiate an auction for an item from a first client device associated with a first user account. The extended reality auction system also receives image data captured from a camera of the first client device, e.g., via a live stream. The extended reality auction system identifies whether the image data depicts at least part of the item of the auction. The auction is initiated based on the image data identification.

The extended reality auction system provides the image data in an extended reality environment to a second client device associated with a second user account. For example, the extended reality auction system causes the second client device to display the image data along with a three-dimensional rendering of the item and additional information about the item, such as the current bid price in an extended reality environment, e.g., augmented or virtual reality.

As the auction continues, the extended reality auction system determines whether one or more criteria of the auction (e.g., a threshold distance between the first client device and the item) are satisfied by the image data. If a criterion of the auction is not satisfied, the extended reality auction system initiates a status action of the auction, such as transmitting a notification to the first client device to move closer to the item. Accordingly, the extended reality auction system improves the trust in the authenticity of the item by providing a live stream of image data of the item and allowing a potential buyer the ability to inspect various aspects of the item via the image data, while providing the ease of access of an online auction.

This Summary introduces a selection of concepts in a simplified form that are further described below in the Detailed Description. As such, this Summary is not intended to identify essential features of the claimed subject matter, nor is it intended to be used as an aid in determining the scope of the claimed subject matter.

### BRIEF DESCRIPTION OF THE DRAWINGS

The detailed description is described with reference to the accompanying figures. Entities represented in the figures are indicative of one or more entities and thus reference is made interchangeably to single or plural forms of the entities in the discussion.
FIG. 1 is an illustration of an environment in an example implementation that is operable to employ digital systems and techniques for initiating and maintaining auctions for display in an extended reality environment as described herein.
FIG. 2 depicts a system in an example implementation showing operation of an extended reality auction system of FIG. 1 in greater detail.
FIG. 3 illustrates a representation of extended reality auction features.
FIG. 4 depicts a system in an example implementation showing operation of generating a path for image capture by the extended reality auction system of FIG. 1.
FIG. 5 depicts a system in an example implementation showing operation of initiating the generation of an auction NFT by the extended reality auction system of FIG. 1.
FIG. 6 depicts a system in an example implementation showing operation of monitoring biometric measurements during an auction by the extended reality auction system of FIG. 1.
FIG. 7 is a flow diagram depicting a procedure in an example implementation in which a status action for an auction is initiated in a digital image.
FIG. 8 illustrates an example system including various components of an example device that can be implemented as any type of computing device as described and/or utilize with reference to FIGS. 1-7 to implement embodiments of the techniques described herein.

### DETAILED DESCRIPTION

### Overview

Conventional auction systems allow users to place bids on items from anywhere in the world with a connection to the Internet. However, in-person auctions are organized and take place despite various online auction services providing auction capabilities. This is because conventional online auction systems lack various aspects of in-person auctions, including a bidder's ability to inspect aspects of item and identify defects, ask questions, assess how others are reacting, and network and socialize with other present parties of the auction. Consequently, conventional online auctions result in an overall lack of trust in the authenticity of the item or in the seller and a reduced experience of the participating parties.

Accordingly, techniques are described that overcome these limitations to support interaction and display of auctions in an extended reality environment, such as an augmented reality environment or a virtual reality environment. Consider an example in which a user wants to auction off a globe. The first user via a user interface indicates to an extended reality auction system to start an auction for the globe. The extended reality auction system transmits a request to the first user to provide live image data of the globe. A camera of a client device of the first user captures a live stream of a physical environment, e.g., a room in the individual's home with the globe for auction. The live stream is processed by the extended reality auction system into image data of digital images, where each digital image depicts a perspective of the physical environment. In some instances, the image data depicts a part of the globe, e.g., North America.

The extended reality auction system verifies whether the live camera feed is being executed by the first user in real-time. The extended reality auction system then identifies the item, e.g., by comparing the image data to previous digital content received for the globe as part of the auction request. The extended reality auction system determines an amount of the image data that the globe or the part of the globe is occupying, and initiates the auction based on the amount, e.g., compared to a threshold amount.

A second user also indicates interest in participating in the auction of the globe to the extended reality auction system. In response, the live stream of image data is transmitted to a client device of the second user. The image data is displayed in an extended reality environment. During the auction, various functionality in the extended reality environment is considered. For example, a three-dimensional rendering of the globe is displayed in the extended reality environment, e.g., rendered in real-time as the image data is received. Users viewing or participating in the auction via the extended reality environment can request for image data that captures a particular part of the globe, such as Hawaii and Australia. The extended reality auction system processes these requests and generates an augmented path for display on the first client device for the first user to navigate along the globe to address the requests.

Also, the extended reality auction system generates displays for customized environments based on user preferences. In one instance, avatars of other users participating in the auction are configured in a display. Additionally, the second user, via the second computing device, can chat and discuss with the other users, visualize the reactions of the other users, and see who is bidding on the globe. In some instances, the extended reality auction system processes the text and voice chat to determine the overall interest in the globe. In contrast, the second user can choose to participate anonymously and review the image data and other auction data privately.

In some instances, the second client device receives biometric measurements, such as heart rate, of the second user and the extended reality auction system determines an excitement level of the second user based on the biometric measurements. For example, if the heart rate of the second user exceeds a threshold heart rate, the extended reality auction system initiates an action, such as preventing the second user from placing a bid. This assists the second user to prevent getting "caught in the moment."

The extended reality auction system performs checks to determine whether the image data meets the criteria of the auction. In one instance, a criterion of the auction is not satisfied by the image data, such as the camera device is too far away from the globe, and the extended reality auction system initiates an action, such as notifying the first user to get closer to the globe.

Once the auction has ended, the extended reality environment initiates the minting of a non-fungible token (NFT) on a blockchain for the globe with auction data including the image data from the live auction. The NFT, after minting, is transferred to a blockchain account of a user that has "won" the auction. By incorporating live features of an in-person auction in an extended reality environment, the described systems are capable of providing an experience that incorporates the social and physical environment of an in-person auction with the ease of access of an online auction.

### Example Environment

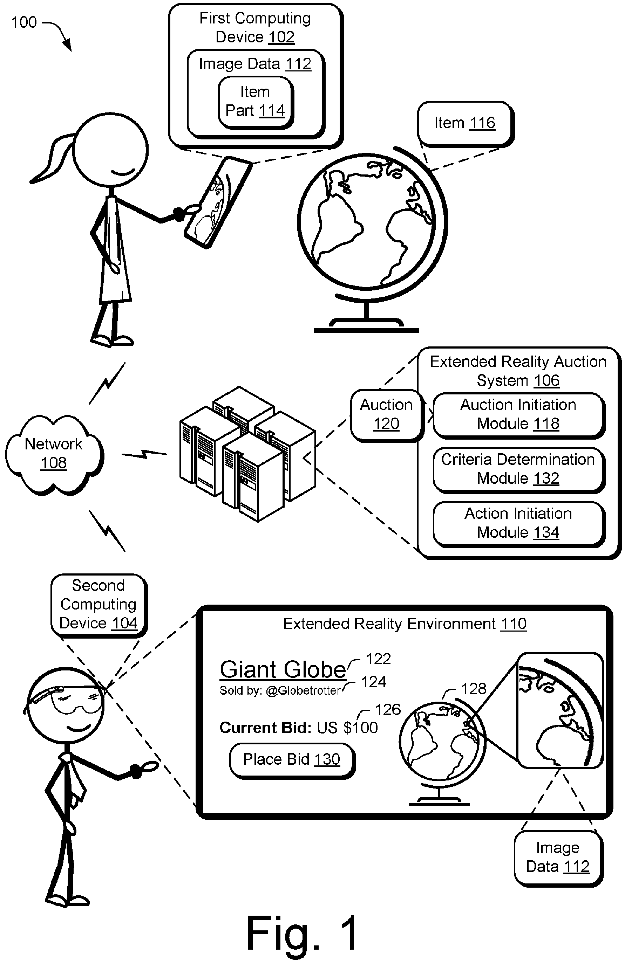

FIG. 1 is an illustration of an environment 100 in an example implementation that is operable to employ digital systems and techniques for initiating and maintaining auctions for display in an extended reality environment as described herein. The illustrated environment 100 includes a first computing device 102, a second computing device 104, and a third computing device that includes an extended reality auction system 106 connected to a network 108. An example computing device (e.g., the first computing device 102, the second computing device 104, or the third computing device) is configurable as a desktop computer, a laptop computer, a mobile device (e.g., assuming a handheld configuration such as a tablet, mobile phone, or an AR and/or VR headset), and so forth. Thus, the example computing device ranges from a full resource device with substantial memory and processor resources (e.g., personal computers, game consoles) to a low-resource device with limited memory and/or processing resources, e.g., mobile devices. In some examples, the example computing device is representative of a plurality of different devices such as multiple servers utilized to perform operations "over the cloud" or as part of a digital service accessible via the network 108.

In some examples, the extended reality auction system 106 is part of a service provider system implementing a service platform of digital services, as maintained in the storage device and are executable via a processing system. Digital services involve electronic delivery of data and implementation of data functionality by computing devices to support a range of computing device operations. Digital services, for instance, include creation, management, and dissemination of digital content via the network 108, e.g., webpages, applications, digital images, digital audio, digital video, and so forth. The digital services are also implemented to control access to and transfer of physical goods and services through corresponding digital content, e.g., sales, product listings, advertisements, etc. Digital services further pertain to operation of computational resources (e.g., processing, memory, and network resources) of computing devices that support the access to and management of the digital content by the system. Functionality of the computing devices 102, 104 to access the digital services of the service provider system via the extended reality auction system 106 are configurable as browser, network-enabled applications, third-party plugins, and so on to access the digital services via the network 108.

The illustrated environment 100 also includes an extended reality environment 110 as a user interface displayed by a display device that is communicatively coupled to the second computing device 104 via a wired or a wireless connection. In some instances, the first computing device 102 is also communicatively coupled to a display device to display a different extended reality environment as a user interface via a wired or a wireless connection.

A variety of device configurations are usable to implement the various computing devices and/or the display device. The third computing device includes a storage device and the extended reality auction system 106. The storage device includes digital content such as digital photographs, digital images, digital videos, augmented reality content, virtual reality content, etc., as well as listings that represent items that are available for bid via the extended reality auction system 106.

The extended reality auction system 106 is illustrated as having, receiving, and/or transmitting input data including image data 112. In this example, the image data 112 includes digital images that depict a physical environment with at least part 114 of an item 116, e.g., a physical environment including a part of a globe. In some instances, the extended reality auction system 106 receives and processes the image data 112 to transmit to the extended reality environment 110.

An auction initiation module 118 is configured by the extended reality auction system 106 to generate and initiate an auction 120, e.g., based on the image data 112. The auction 120 (e.g., via a listing on a website) indicates that the item 116 is available for bidding/purchase/transfer. The auction 120 is then exposed for access via the network 108 to potential purchasers, e.g., to the second computing device 104 in the extended reality environment 110. For example, the first computing device 102 transmits a request, which is received by the auction initiation module 118 to list the item 116 for auction using digital content. The auction initiation module 118 identifies digital content describing the item 116, such as to include a title 122, seller identification 124, bid price 126, three-dimensional rendering 128, and so forth. The auction 120, once generated, also includes an option 130 that is user selectable via a user interface to initiate the transaction, e.g., to "place bid" or otherwise transfer possession and/or ownership of the item 116. The item 116 is then listed using the image data 112 and information describing the item 116.

A criteria determination module 132 is configured by the extended reality auction system 106 to identify whether the image data 112 is compliant with criteria of the auction. An action initiation module 134 is configured by the extended reality auction system 106 to initiate a status action based on the image data 112 being non-compliant with the criteria.

### Auctions in Extended Reality Environments

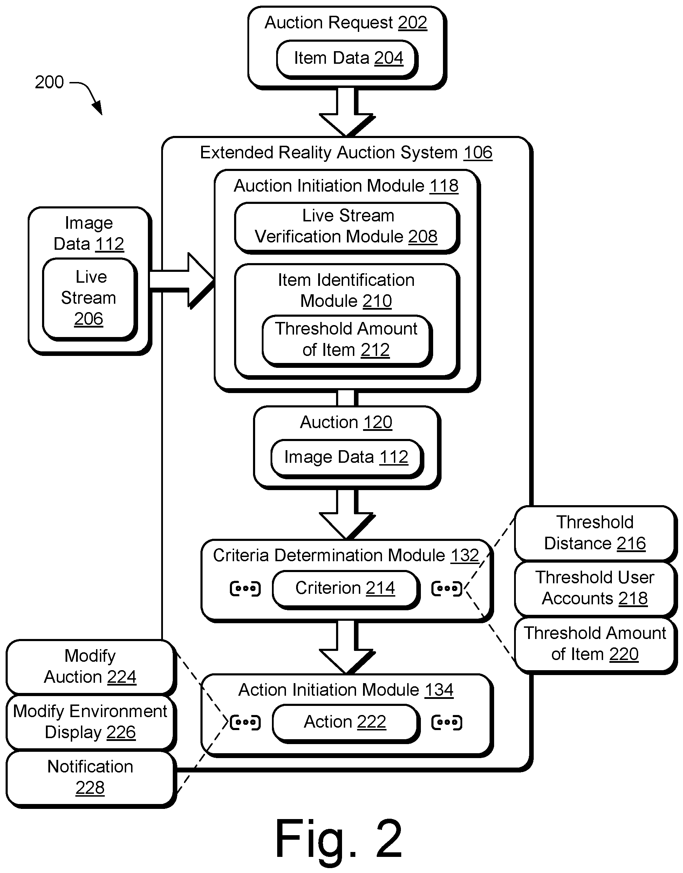

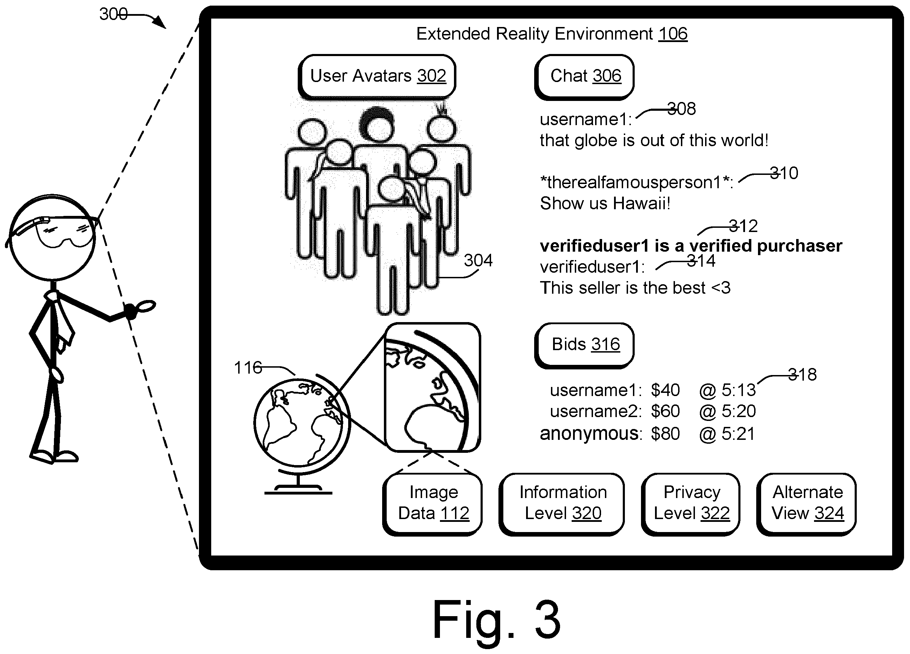

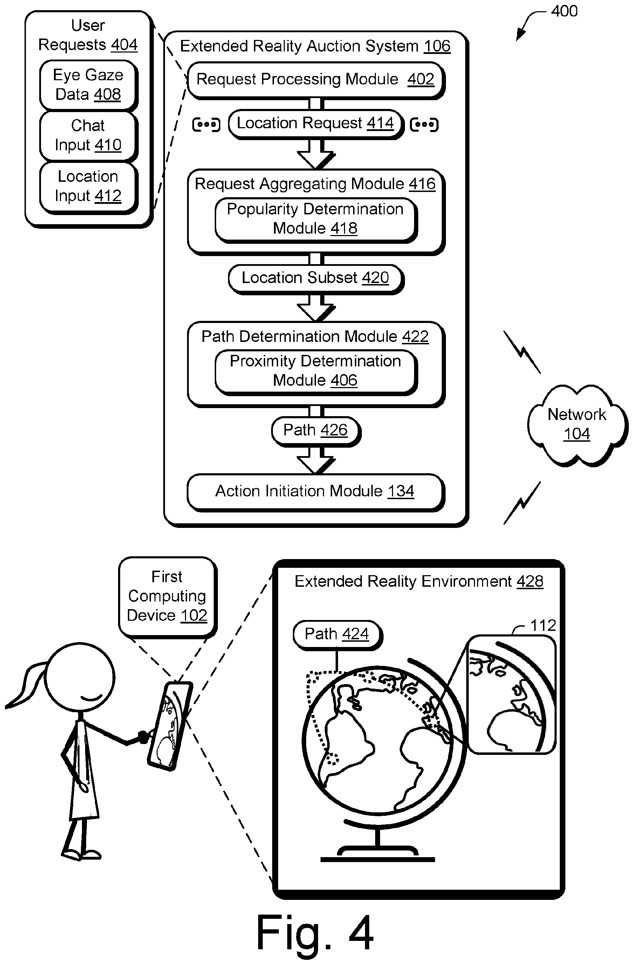

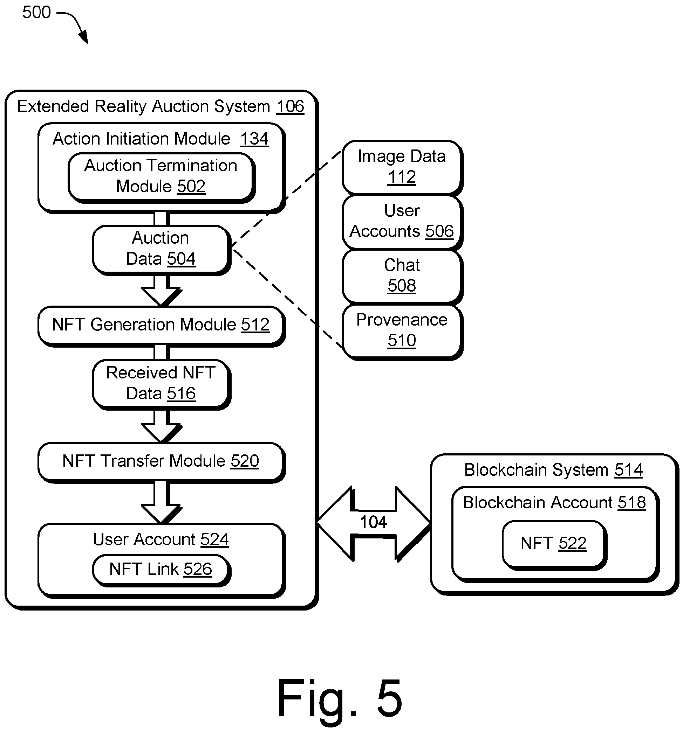

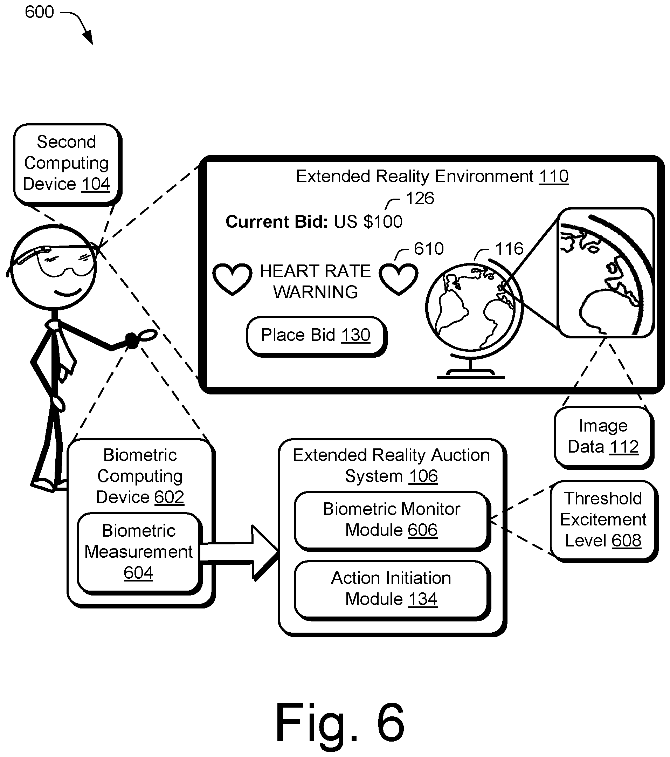

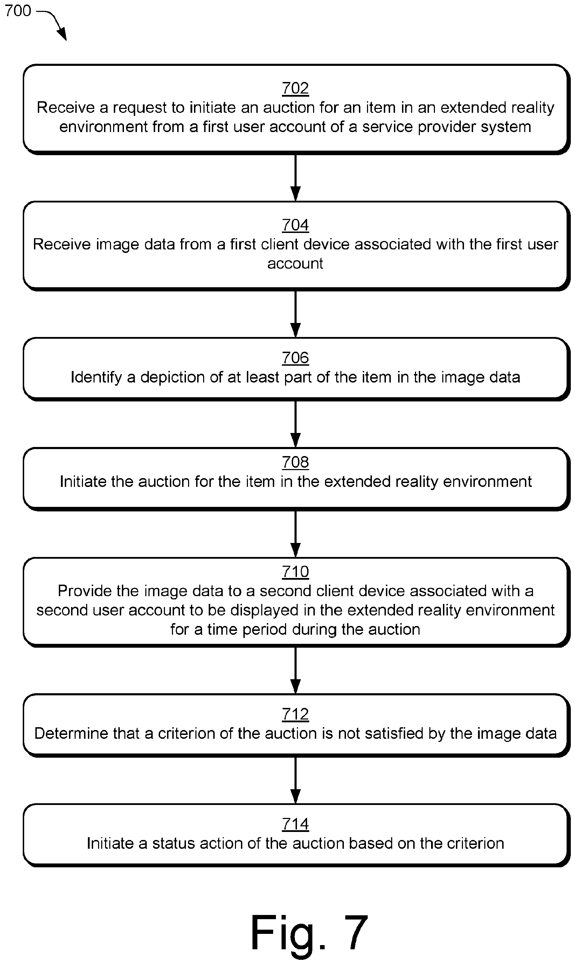

FIG. 2 depicts a system 200 in an example implementation showing operation of an extended reality auction system of FIG. 1 in greater detail. FIG. 3 illustrates a representation 300 of extended reality auction features. FIG. 4 depicts a system 400 in an example implementation showing operation of generating a path for image capture by the extended reality auction system of FIG. 1. FIG. 5 depicts a system 500 in an example implementation showing operation of initiating the generation of an auction NFT by the extended reality auction system of FIG. 1. FIG. 6 depicts a system 600 in an example implementation showing operation of monitoring biometric measurements during an auction by the extended reality auction system of FIG. 1. FIG. 7 is a flow diagram depicting a procedure 700 in an example implementation in which a status action for an auction is initiated in a digital image.

The following discussion describes techniques that may be implemented utilizing the previously described systems and devices. Aspects of the procedure as shown stepwise may be implemented in hardware, firmware, software, or a combination thereof. The procedure is shown as a set of blocks that specify operations performed by one or more devices and are not necessarily limited to the orders shown for performing the operations by the respective blocks. In portions of the following discussion, reference will be made to FIGS. 1-7.

To begin in FIG. 2, the extended reality auction system 106 receives an auction request 202 to generate an auction 120 for an item 116 from a first computing device 102 associated with a first user account of a service provider system (block 702). In some instances, the auction request 202 includes item data 204 that identifies and/or describes the item 116, e.g., a description, initial image data, provenance, a three-dimensional rendering of the item, fingerprinting data, and so forth. The auction initiation module 118 transmits a request to the first computing device 102 to provide image data 112. The auction initiation module 118 receives the image data 112 from the first computing device 102 associated with the first user account (block 704). The image data 112, for instance, includes a live stream 206 from a camera device associated with the first computing device 102 in real-time. In some instances, the image data 112 is combined with the three-dimensional rendering, e.g., to add additional detail to the three-dimensional rendering. Additionally, the extended reality auction system 106 may cause display of a highlighted location (e.g., via a cone shaped zoom feature) on the three-dimensional rendering of the item 116 to show where the live stream 206 is currently capturing on the item 116. In another instance, the three-dimensional rendering is accessible in the extended reality environment 110 in an alternate view to the image data 112, as described with respect to FIG. 3.

A live stream verification module 208 is configured by the auction initiation module 118 to verify whether the live stream 206 is streamed in real-time, e.g., is not pre-recorded or a modified video. In one instance, the live stream verification module 208 determines whether the first computing device 102 is live streaming based on compliance with randomized instructions, e.g., to move the camera device associated with the first computing device 102 "up." In another instance, the live stream verification module 208 transmits a verification code to present in the image data 112.

After verifying the live stream 206, an item identification module 210 is configured by the auction initiation module 118 to determine whether the item 116 is captured in the image data 112. For instance, the item identification module 210 identifies an item in the image data 112 and determines whether the item in the image data 112 is the item 116 subject of the auction 120. In some instances, the item identification module 210 identifies whether the image data 112 depicts a threshold amount 212 of the item 116 (block 706). Other criteria to initiate the auction are contemplated, as described herein with respect to the criteria determination module 132. Then, the auction initiation module 118 initiates the auction 120 for the item 116 in the extended reality environment 110 (block 708).

After the auction 120 is initiated, the extended reality auction system 106 lists the auction 120 in an online marketplace available for user selection. Upon receiving user selection of the listing of the auction 120, the extended reality auction system 106 provides the image data 112 to the second computing device 104 associated with a second user account of the service provider system to be displayed in an extended reality environment 110 for a time period during the auction 120 (block 710).

In some instances, the auction 120 and the image data 112 are received by the criteria determination module 132 to monitor the auction 120 based on one or more criteria 214. Examples of the criterion 214 include a threshold distance 216 between the first computing device 102 and the item 116, a threshold number of user accounts 218 participating in the auction, a threshold amount 220 of the item 116 in the image data 112, and so on. The criteria determination module 132, for instance, determines whether a criterion 214 of the auction 120 is satisfied by the auction 120 or the image data 112 (block 712). Examples of events that result in the criterion 214 not being satisfied include the live stream 206 is interrupted or ends, the camera device is moved to stream a different item and the item 116 is out of view, the camera device is moved more than the threshold distance 216 away from the item, the first user inputs to the auction to close the auction, there are no users or below the threshold number of user accounts 218 at the auction 120, the amount of the item that encompasses the image data 112 is below the threshold amount 220, and so forth.

If the criterion is not satisfied by the auction 120, the action initiation module 134 determines and initiates an action 222 to rectify the criterion 214 (block 714). Examples of the action include modifying the auction 224 (such as by pausing bids or ending the auction 120), causing a modification of the display 226 of the extended reality environment 110 on the second computing device 104 (such as by causing the extended reality environment 110 to display "Waiting for Auctioneer"), transmitting a notification 228 to the first computing device 102 (such as to "Get Closer to the Item"), and so forth. In some instances, once the action 222 has been resolved, the action initiation module 134 returns the auction 120 to a compliant state.

In FIG. 3, the extended reality auction system 106 causes the extended reality environment 110 of the second computing device 104 to display customizable auction features. In this way, a user simulcasts the auction 120 and various desired features in the extended reality environment 110. In some instances, the extended reality auction system 106 causes display of user avatars 302. This allows users to see how many other users are interested in the auction 120. The second user of the second computing device 104, for instance, interacts with other avatars via a user avatar 304. In some instances, the auction 120 includes a chat 306 feature where users can discuss the auction, e.g., via voice and/or text input. For example, a user with username of "username1" posts a first chat 308. Another user, such as a famous person as determined by the extended reality auction system 106, posts a second chat 310, with emphasis to indicate that the famous person is certified, such as "*". A verified user is indicated as a user who has previously interacted with the first user, e.g., via emphasis of bolding and an automatic chat tag 312 stating that the verified user is a verified purchaser along with the third chat 314. Other distinguishing features of avatars and/or usernames are contemplated, such as respective badges for experts, prior owners, famous people, and so forth.

The extended reality auction system 106 analyzes the chat 306. The extended reality auction system 106, for instance, uses a model trained using machine learning to process the chat 306, e.g., using natural language processing. Examples of the chat analysis of the extended reality auction system 106 include determining an extent of feedback from the chat, such as whether there is mostly positive or negative feedback for the item 116 (e.g., in the first chat 308) or for the first user (e.g., in the third chat 314), determining requests for locations on the item 116 for the first computing device 102 to capture with the camera device (e.g., "Hawaii" on the item 116 as a globe in the second chat 310), determining a current level of interest in the auction 120 (e.g., based on the amount of users entering/leaving and/or participating in the auction 120), and so forth.

The extended reality auction system 106, for instance, causes display of bids 316. An example bid 318 includes a username, an amount, and a corresponding time of the bid 318. In some instances, the extended reality auction system 106 causes display of additional auction features. Example auction features include an information level 320, a privacy level 322, and an alternate view 324. The extended reality auction system 106, for example, requests an information level 320 (e.g., "Beginner," "Intermediate," or "Expert") indicating a degree of information to cause display for the second user. A "Beginner" information level received by the extended reality auction system 106 causes a display of summarized and/or simplified information related to the item 116.

In another instance, the privacy level 322 (e.g., social, private, and/or anonymous) is utilized by the extended reality auction system 106 to determine a display for the second user. For example, a social privacy level indicates public sharing of user information (e.g., username, verification, bids, avatar, and so forth), whereas an anonymous privacy level indicates a limited sharing of user information, e.g., a grey avatar and "anonymous" as the username displayed to other users. The alternate view 324 includes an option to separate into a private room with the item 116 or other auction data for closer examination.

In FIG. 4, the extended reality auction system 106 generates a path for the first computing device 102 to show locations of interest on the item. To do this, a request processing module 402 is configured by the extended reality auction system 106 to process user requests 404 into a set of location requests 406. Examples of the user requests 404 include eye gaze data 408, chat input data 410 via natural language processing (such as "Show us Hawaii" from the second chat 310 in FIG. 3), and location input data 412. Location input data 412, for instance, includes receiving a user input indicating a selection of a location on a rendering of the item 116 and/or receiving a zoom input on a particular location of the item 116. The request processing module 402 determines a location request 414 from a user request 404 indicating the location of interest.

The extended reality auction system 106 configures a request aggregating module 416 to group the location requests 414. For instance, a first user request indicates "Rocky Mountains," a second user request indicates "Colorado," and a third user request indicates "Pikes Peak." The request aggregating module 416 groups these requests into a group corresponding to the location on the globe on Colorado. In some instances, the request aggregating module 416 determines a common feature between the user requests (e.g., mountains) based on a model trained using machine learning. The request aggregating module 416, for instance, generates additional locations based on the common feature, e.g., the location corresponding to Mount Everest.

In some instances, a popularity determination module 418 is configured by the request aggregating module 416 to select a subset of locations 420. The popularity determination module 418, for instance, determines how many user requests correspond to a location, e.g., based on the groups. In some instances, the popularity determination module 418 weights a location request by the type of request, e.g., a location input request is weighted more than an eye gaze request. The popularity determination module 418 determines the subset of locations 420 based on the weighted number of requests for each location or location grouping. In some instances, one or more additional locations are added to the subset of locations 420 based on predicted interest in the additional locations, e.g., using a model trained using machine learning. In some instances, the request aggregator module 416 similarly analyzes questions from the chat 306 to determine questions for the first user, and the popularity determination module 418 selects a set of questions to transmit to the first computing device 102.

The subset of locations 420 is leveraged by a path determination module 422 configured by the extended reality auction system 106 to generate a path 424, e.g., for the first computing device 102 to capture on the item 116. In some instances, the proximity determination module 426 identifies spatial proximities of the locations to one another. In one instance, the spatial proximities are leveraged to generate the path 424 such that the distance between locations is minimized. In some instances, the path determination module 422 determines user actions required to take the path 424, e.g., to turn the globe right or to open a car door.

The action initiation module 134 is configured to perform an action with the path 424. In one instance, the action initiation module 134 causes display of the path 424 on a display device of the first computing device 102, e.g., augmented over the image data 112 in an extended reality environment 428 to point where the first user is to move the camera device next. In another instance, the action initiation module 134 transmits the path 424 to the first computing device 102 for automatic capture of the locations on the path 424. In some instances, the action initiation module 134 causes the path 424 to be displayed in the extended reality environment 110 as the image data 112 for the path is received, such that the second user can revisit the image data 112 in locations along the path 424.

When the auction 120 concludes (e.g., the timer runs out), as illustrated in FIG. 5, an auction termination module 502 is configured by the action initiation module 134 to assign a winning user account of the auction 120, e.g., based on the winning user account bidding the highest amount. The auction termination module 502 determines auction data 504 of the auction 120. Examples of auction data include image data 112, user accounts 506 (such as bidders, participants, and sellers), chat 508, provenance 510 (such as scanned certificate data that verifies the authenticity of the item 116), fingerprinting data as a result of the live stream, and so forth.

A non-fungible token (NFT) generation module 512 is configured by the extended reality auction system 106 to initiate the generation of an NFT via a blockchain system 514. For instance, the NFT generation module 512 generates a request for an NFT. In some instances, the NFT request includes the auction data 504. The NFT generation module 512 transmits the NFT request to the blockchain system 514 and, if successful, the NFT generation module 512 receives NFT data 516, such as the auction data 504, minting time of the NFT, and so forth.

In some instances, a blockchain account 518 is associated with the winning user account, e.g., via a public key. A NFT transfer module 520 is configured by the extended reality auction system 106 to initiate transfer a resulting NFT 522 to the blockchain account 518. For instance, the NFT transfer module 520 generates a transfer request and transmits the transfer request to the blockchain system 514. The NFT transfer module 520 communicates successful transfer of the NFT 522 to a user account 524 of the winning user. In one instance, the NFT transfer module 520 stores an NFT link 526 in the user account 524 for access to the NFT on the blockchain system 514. In this way, the winning user can verify what aspects were shown in the auction 120 and compare those aspects with the received item, immutable by the first user, to promote trust in the authenticity of the item. The NFT is generated and verified via the extended reality auction system 106 to reduce tampering by the first user.

FIG. 6 depicts a system 600 in an example implementation showing operation of monitoring biometric measurements during an auction by the extended reality auction system of FIG. 1. A biometric computing device 602 (e.g., a wearable device) is communicatively coupled to the second computing device 104 and/or the extended reality auction system 106, e.g., via the network 108. The biometric computing device 602 determines biometric measurements 604, e.g., heart rate, blood pressure, movement, blood oxygen level, and so forth. The extended reality auction system 106 receives the biometric measurements 604. In some instances, the biometric measurements 604 are received, solely, when the measurement is atypical, e.g., a heart rate higher than the resting heart rate of the user. In other instances, the biometric measurements 604 are monitored by a biometric monitor module 606. The biometric monitor module 606 is configured by the extended reality auction system 106 to monitor an excitement level of the second user based on the biometric measurements 604. The biometric monitor module 606, for instance, determines the excitement level based on one or more of the biometric measurements for a particular time, e.g., using a weighted average.

The biometric monitor module 606 also determines a threshold excitement level 608, e.g., based on received user preferences. In some instances, the threshold excitement level 608 is determined using a model trained by machine learning, e.g., using training data based on user feedback after previous auctions. For instance, the training data is based on a first collection of feedback from the user indicating an appreciation for the threshold excitement level 608 and a second collection of feedback from the user indicating a higher/lower desired threshold excitement level 608.

The action initiation module 134 is configured to modify the extended reality environment 110 for display on the second computing device 104 based on the biometric measurements 604. For example, the extended reality environment 110 is configured by the extended reality auction system 106 to display a warning 610, along with other information, such as the image data 112 of the item 116, the current bid price 126, and the option 130 to place a bid. Additional examples for modifications of the extended reality environment 110 include causing display of a private virtual room with the item 116, causing removal information about the auction including other bidders from the display, causing display of and/or enforcing a maximum bid amount input previously by the user (e.g., at the beginning of the auction), causing display of a notification of the excitement level, such as the heart rate of the user, and so forth. In some instances, the modification to the extended reality environment 110 lasts until the current excitement level does not exceed the threshold excitement level. In this way, users who tend to get caught up by the excitement of the auction 120 can be automatically checked to mitigate user regret.

### Example System and Device

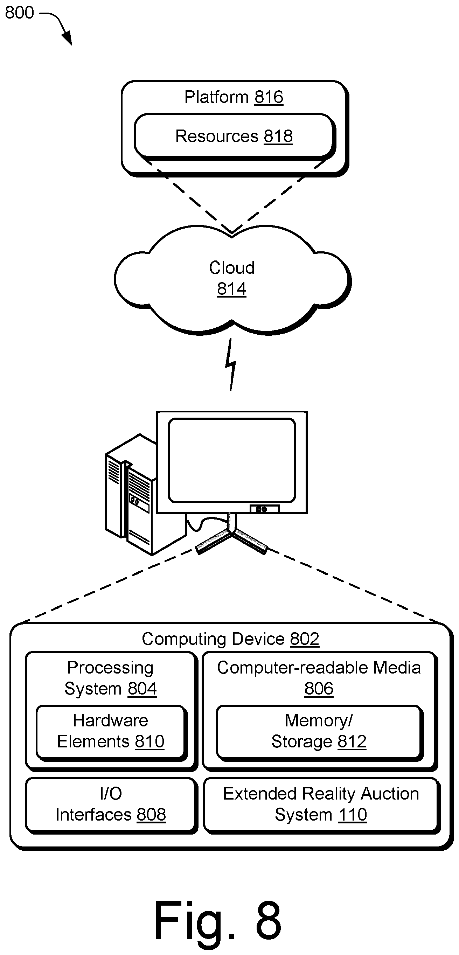

FIG. 8 illustrates an example system 800 that includes an example computing device that is representative of one or more computing systems and/or devices that are usable to implement the various techniques described herein. This is illustrated through inclusion of the extended reality auction system 106. The computing device 802 includes, for example, a server of a service provider, a device associated with a client (e.g., a client device), an on-chip system, and/or any other suitable computing device or computing system.

The example computing device 802 as illustrated includes a processing system 804, one or more computer-readable media 806, and one or more I/O interfaces 808 that are communicatively coupled, one to another. Although not shown, the computing device 802 further includes a system bus or other data and command transfer system that couples the various components, one to another. For example, a system bus includes any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 804 is representative of functionality to perform one or more operations using hardware. Accordingly, the processing system 804 is illustrated as including hardware elements 810 that are configured as processors, functional blocks, and so forth. This includes example implementations in hardware as an application specific integrated circuit or other logic device formed using one or more semiconductors. The hardware elements 810 are not limited by the materials from which they are formed or the processing mechanisms employed therein. For example, processors are comprised of semiconductor(s) and/or transistors (e.g., electronic integrated circuits (ICs)). In such a context, processor-executable instructions are, for example, electronically-executable instructions.

The computer-readable media 806 is illustrated as including memory/storage 812. The memory/storage 812 represents memory/storage capacity associated with one or more computer-readable media. In one example, the memory/storage 812 includes volatile media (such as random access memory (RAM)) and/or nonvolatile media (such as read only memory (ROM), Flash memory, optical disks, magnetic disks, and so forth). In another example, the memory/storage 812 includes fixed media (e.g., RAM, ROM, a fixed hard drive, and so on) as well as removable media (e.g., Flash memory, a removable hard drive, an optical disc, and so forth). The computer-readable media 806 is configurable in a variety of other ways as further described below.

Input/output interface(s) 808 are representative of functionality to allow a user to enter commands and information to computing device 802, and also allow information to be presented to the user and/or other components or devices using various input/output devices. Examples of input devices include a keyboard, a cursor control device (e.g., a mouse), a microphone, a scanner, touch functionality (e.g., capacitive or other sensors that are configured to detect physical touch), a camera (e.g., which employs visible or non-visible wavelengths such as infrared frequencies to recognize movement as gestures that do not involve touch), and so forth. Examples of output devices include a display device (e.g., a monitor or projector), speakers, a printer, a network card, tactile-response device, and so forth. Thus, the computing device 802 is configurable in a variety of ways as further described below to support user interaction.

Various techniques are described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques are implementable on a variety of commercial computing platforms having a variety of processors.

Implementations of the described modules and techniques are storable on or transmitted across some form of computer-readable media. For example, the computer-readable media includes a variety of media that is accessible to the computing device 802. By way of example, and not limitation, computer-readable media includes "computer-readable storage media" and "computer-readable signal media."

"Computer-readable storage media" refers to media and/or devices that enable persistent and/or non-transitory storage of information in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which are accessible to a computer.

"Computer-readable signal media" refers to a signal-bearing medium that is configured to transmit instructions to the hardware of the computing device 802, such as via a network. Signal media typically embodies computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 810 and computer-readable media 806 are representative of modules, programmable device logic and/or fixed device logic implemented in a hardware form that is employable in some embodiments to implement at least some aspects of the techniques described herein, such as to perform one or more instructions. Hardware includes components of an integrated circuit or on-chip system, an application-specific integrated circuit (ASIC), a field-programmable gate array (FPGA), a complex programmable logic device (CPLD), and other implementations in silicon or other hardware. In this context, hardware operates as a processing device that performs program tasks defined by instructions and/or logic embodied by the hardware as well as a hardware utilized to store instructions for execution, e.g., the computer-readable storage media described previously.

Combinations of the foregoing are also employable to implement various techniques described herein. Accordingly, software, hardware, or executable modules are implementable as one or more instructions and/or logic embodied on some form of computer-readable storage media and/or by one or more hardware elements 810. For example, the computing device 802 is configured to implement particular instructions and/or functions corresponding to the software and/or hardware modules. Accordingly, implementation of a module that is executable by the computing device 802 as software is achieved at least partially in hardware, e.g., through use of computer-readable storage media and/or hardware elements 810 of the processing system 804. The instructions and/or functions are executable/operable by one or more articles of manufacture (for example, one or more computing devices 802 and/or processing systems 804) to implement techniques, modules, and examples described herein.

The techniques described herein are supportable by various configurations of the computing device 802 and are not limited to the specific examples of the techniques described herein. This functionality is also implementable entirely or partially through use of a distributed system, such as over a "cloud" 814 as described below.

The cloud 814 includes and/or is representative of a platform 816 for resources 818. The platform 816 abstracts underlying functionality of hardware (e.g., servers) and software resources of the cloud 814. For example, the resources 818 include applications and/or data that are utilized while computer processing is executed on servers that are remote from the computing device 802. In some examples, the resources 818 also include services provided over the Internet and/or through a subscriber network, such as a cellular or Wi-Fi network.

The platform 816 abstracts the resources 818 and functions to connect the computing device 802 with other computing devices. In some examples, the platform 816 also serves to abstract scaling of resources to provide a corresponding level of scale to encountered demand for the resources that are implemented via the platform. Accordingly, in an interconnected device embodiment, implementation of functionality described herein is distributable throughout the system 800. For example, the functionality is implementable in part on the computing device 802 as well as via the platform 816 that abstracts the functionality of the cloud 814.

### Conclusion

Although implementations of extended reality auction systems have been described in language specific to structural features and/or methods, it is to be understood that the appended claims are not necessarily limited to the specific features or methods described. Rather, the specific features and methods are disclosed as example implementations of systems for locating prospective objects based on removed objects, and other equivalent features and methods are intended to be within the scope of the appended claims. Further, various different examples are described, and it is to be appreciated that each described example is implementable independently or in connection with one or more other described examples.

## Claims

1. A method comprising:
receiving, by a computing device, a request to initiate an auction for an item in an extended reality environment from a first user account of a service provider system;
receiving, by the computing device, image data from a first client device associated with the first user account;
identifying, by the computing device, a depiction of at least part of the item in the image data;
initiating, by the computing device, the auction for the item in the extended reality environment responsive to the identifying;
providing, by the computing device, the image data to a second client device associated with a second user account to be displayed in the extended reality environment for a time period during the auction;
determining, by the computing device, that a criterion of the auction is not satisfied by the image data; and
initiating, by the computing device, a status action of the auction based on the criterion.

2. The method as described in claim 1, wherein the image data comprises a live stream of the at least part of the item.

3. The method as described in claim 1 or 2, wherein the criterion is at least one of a threshold distance between the first client device and the item, a threshold amount of the item in the image data, or a threshold number of user accounts participating in the auction.

4. The method as described in any one of the preceding claims, wherein the status action includes at least one of ending the auction, pausing the auction, reducing available auction time, or transmitting a notification to the first client device.

5. The method as described in any one of the preceding claims, further comprising causing display on the second client device of a representation corresponding to an alternate view in the extended reality environment.

6. The method as described in any one of the preceding claims, further comprising:
aggregating requests for a plurality of locations on the item in the extended reality environment from one or more third client devices;
determining a subset of locations from the plurality of locations on the item; and
transmitting a request for additional image data of the subset of locations on the item to the first client device during the auction of the item,
wherein, optionally, the aggregating the requests for the plurality of locations comprises processing at least one of eye-gaze data, chat inputs, or location inputs from the one or more third client devices.

7. The method as described in claim 6, further comprising modifying the extended reality environment for display on the second client device to include a current location of the additional image data; and/or
wherein the method further comprises:
generating a path between the subset of locations based on proximities between respective locations; and
modifying the extended reality environment for display on the first client device to include the path.

8. The method as described in any one of the preceding claims, further comprising:
determining that the second user account has won the auction;
transmitting a first request to a blockchain system to generate a non-fungible token (NFT) including the image data from the auction; and
transmitting a second request to the blockchain system to transfer the NFT to a blockchain account associated with the second user account,
wherein, optionally, the NFT further includes data describing at least one of a chat of the auction, participating user accounts of the auction, information relating to the item, or item fingerprinting generated from the image data.

9. The method as described in any one of the preceding claims, further comprising:
determining an excitement level associated with the second client device based on a biometric measurement; and
modifying the extended reality environment for display on the second client device based on the excitement level,
wherein, optionally, the modifying the extended reality environment for display includes at least one of displaying a user-defined threshold bid amount, displaying a notification of the excitement level, removing information from the display, or removing avatars from the display.

10. The method as described in any one of the preceding claims, further comprising:
identifying a privacy level of the second user account;
receiving a bid for the item in the auction from the second user account; and
causing display of the extended reality environment to include the bid based on the privacy level.

11. The method as described in any one of the preceding claims, further comprising:
receiving a three-dimensional digital representation of the item from the first client device;
combining the image data with the three-dimensional digital representation of the item; and
causing display of the combined digital representation of the item in the extended reality environment on the second client device.

12. The method as described in any one of the preceding claims, further comprising:
determining a degree of information to display based on the second user account; and
modifying the extended reality environment for display on the second client device based on the degree of information.

13. The method as described in any one of the preceding claims, further comprising:
receiving chat from one or more third client devices viewing the auction of the item; and
transmitting a current level of interest in the item to the first client device based on the chat; and/or
wherein the method further comprises: determining avatars for one or more third user accounts; and
modifying the extended reality environment for display on the second client device to include a representation of the avatars.

14. A computing device comprising:
a processing system; and
a computer-readable storage medium having instructions stored thereon that, responsive to execution by the processing system, causes the processing system to perform operations comprising:
identifying an auction of an item including live image data from a first client device;
causing display on a second client device in an extended reality environment of the live image data for a time period during the auction;
determining that a criterion of the auction is not satisfied; and
modifying the extended reality environment for display on the second client device based on the criterion not being satisfied.

15. One or more computer-readable storage media comprising instructions stored thereon that, responsive to execution by one or more processors, causes the one or more processors to perform operations comprising:
receiving image data from a first client device associated with a first user account for an auction of an item;
initiating the auction for the item in an extended reality environment;
causing display on a second client device in the extended reality environment of the image data during the auction;
determining that a criterion of the auction is not satisfied; and
modifying the extended reality environment for display on the second client device responsive to the determining.
